# EUROPÄISCHE PATENTSCHRIFT

(11) **EP 2 978 562 B1**
(45) Veröffentlichungstag und Bekanntmachung des Hinweises auf die Patenterteilung: **07.08.2019**
(21) Anmeldenummer: 14728436.8
(22) Anmeldetag: 20.03.2014
(51) Int. Cl.: B23K 26/36, B23K 26/40, B23K 26/38, B23K 26/06

(54) **VERFAHREN ZUM ABTRAGEN VON SPRÖDHARTEM MATERIAL MITTELS LASERSTRAHLUNG**
METHOD FOR REMOVING BRITTLE-HARD MATERIAL BY MEANS OF LASER RADIATION
PROCÉDÉ D'ABRASION DE MATIÈRE DURE ET CASSANTE AU MOYEN D'UN RAYONNEMENT LASER

(30) Priorität: 26.03.2013 DE 102013005137
(43) Veröffentlichungstag der Anmeldung: 03.02.2016
(73) Patentinhaber: Fraunhofer-Gesellschaft zur Förderung der angewandten Forschung e.V., 80686 München (DE); Rheinisch-Westfälische Technische Hochschule Aachen, 52056 Aachen (DE)
(72) Erfinder: SCHULZ, Wolfgang, 52080 Aachen (DE); EPPELT, Urs, 52062 Aachen (DE)
(74) Vertreter: Grimm, Ekkehard
(86) Internationale Anmeldenummer: PCT/EP2014/000758
(87) Internationale Veröffentlichungsnummer: WO 2014/154337

(56) Entgegenhaltungen:
- EP-A1- 0 365 754
- JP-A- H06 114 577
- US-A1- 2006 126 868
- US-A1- 2007 235 418
- US-A1- 2008 296 272

## Beschreibung

Die Erfindung betrifft ein Verfahren zum Abtragen, wie beispielsweise Schneiden, Ritzen, Bohren, von sprödhartem Material mittels Laserstrahlung, bei dem sich durch den Abtrag eine Abtragsvertiefung in dem Material ausbildet, deren Flächen beugend und brechend auf die eingebrachte Laserstrahlung wirken und dadurch Strahlungsanteile dieser Laserstrahlung Interferenz-Beugungsmuster innerhalb der Abtragsvertiefung erzeugen, die, sobald diese Strahlungsanteile wieder auf die Flächen der Abtragsvertiefung treffen und in das Materialvolumen eindringen, dort einen entlang der Flächen räumlich veränderlichen Abtrag bewirken und als Folge die Oberfläche aufrauen und Risse in dem Materialvolumen induzieren bzw. induzieren können, wobei als Laserstrahlen für den Abtrag eine Wellenlängenmischung aus mindestens zwei Wellenlängen eingesetzt werden.

Solche Verfahren finden ihre Anwendung unter anderem in der Display-Technik, in der dünne Glassubstrate, ein sprödharter Werkstoff, bearbeitet werden müssen. Gerade die industrielle Display-Technik erobert ein immer größeres Marktvolumen und tendiert zu immer leichteren Geräten und somit auch dünneren Glasscheiben für zum Beispiel Smart Phones und Tablet Computer.

Dünne Glassubstrate bieten gerade dann Vorteile für Displays, wenn die Haltbarkeit und mechanische Stabilität von dickerem Glas erreicht werden kann. Diese dünnen Glasscheiben werden nahezu in allen Flat Panel Displays (FDP's) angewandt. Konventionelle Verfahren zum Bearbeiten solcher dünnen Glasscheiben sind das Fräsen mit definierter Schneide, oder sie basieren auf mechanischen Wirkungen einer gezielt in den Werkstoff oder das Material eingebrachten Rissbildung (Ritzen und Brechen). Eine Vielzahl von bekannten Verfahrensvarianten unter Einsatz von Laserstrahlung basiert ebenfalls darauf, die mechanischen Wirkungen des Prinzips von Ritzen und anschließendem Brechen zu nutzen, indem das Ritzen durch die Einwirkung von Laserstrahlung ersetzt wird und der Werkstoff/das Material nach der Einwirkung der Laserstrahlung gebrochen wird. Die konventionelle mechanische Bearbeitung (Schneiden, Bohren) ist für dünne Glasplatten wesentlich schwieriger als für große Werkstoffdicken. Beim mechanischen Ritzen werden nämlich Mikrorisse eingebracht oder sogar kleine Teile, so genannte Chips, herausgebrochen, so dass ein Schleifen oder Ätzen als nachbearbeitender Prozess notwendig wird.

Es hat sich auch gezeigt, dass die Flächen bzw. Flanken der sich in dem Material ausbildenden Abtragsvertiefung eine beugende und brechende Wirkung auf die eingebrachte Laserstrahlung haben. Hierdurch werden durch Strahlungsanteile der Laserstrahlung Interferenz-Beugungsmuster erzeugt. Sobald diese Strahlungsanteile wieder auf die Flächen der Abtragsvertiefung treffen, wird dort die Oberfläche verstärkt aufgeraut; die lichtbrechende Wirkung dieser Rauhigkeit führt zur Fokussierung der Laserstrahlung und es können Risse in dem angrenzenden Material hervorgerufen werden. Einen sehr großen Einfluss auf die Ausbildung der Abtragsvertiefung und die entstehenden Risse hat auch die Eintrittskante im Bereich der sich ausbildenden Abtragsvertiefung. Von dieser Eintrittskante gehen nämlich Schädigungen in Form von Rissen aus, für die die Laserstrahlung ursächlich zu sein scheint, die auf die Eintrittskante auftrifft.

Die US 2007/0235418 A1 beschreibt ein Verfahren zum Schneiden von Substraten aus Glas mittels eines ersten Laserstrahls und eines zweiten Laserstrahls, bei dem die beiden Laserstrahlen auf unterschiedliche Orte in Richtung einer Strahlachse fokussiert werden und eine unterschiedliche Wellenlänge aufweisen. Indem das Substrat gleichzeitig von der oberen und unteren Fläche aus mit der Strahlung unterschiedlicher Wellenlänge geschnitten wird, soll ein Abplatzen oder Reißen unterdrückt werden.

Die US 2006/0126868 A1 beschreibt ein Verfahren zum Herstellen einer Quarzvorrichtung (crystal device). Bei diesem Verfahren wird im Wesentlichen gleichzeitig ein erstes Licht, das durch eine Kristallplatte absorbiert wird und ein erstes Energieniveau einer Substanz, die die Quarzplatte bildet, von einem Grundzustand zu einem ersten angeregten Zustand anregt, und ein zweites Licht, das das Energieniveau der Substanz, die die Quarzplatte bildet, von dem ersten angeregten Zustand zu einem zweiten angeregten Zustand anregt, um eine Ablation zu erzeugen, um dadurch eine oder mehrere Nut(en) in einem vorgegebenen Muster auf der Kristallplatte zu bilden, angewandt. Es ist erwähnt, dass die Angabe "im Wesentlichen gleichzeitig" den Fall einschließt, bei dem ein erstes Licht und ein zweites Licht mit einem vorgegebenen Zeitintervall dazwischen angewandt werden, ebenso wie den Fall, dass ein erstes Licht und ein zweites Licht gleichzeitig angewandt werden. Um die Anregungszustände zu erreichen, ist beispielsweise das erste Licht die Strahlung eines F₂-Lasers mit einer Wellenlänge von 157 nm und das zweite Licht ist die Strahlung eines ArF-Excimerlasers mit einer Wellenlänge von 193 nm oder ein KRF-Excimerlaser mit einer Wellenlänge von 248 nm.

Die EP 0 365 754 A1 beschreibt ein Verfahren und eine Vorrichtung, mit denen der ablative Effekt eines UV-Lasers erhöht wird. Dieses Verfahren soll in medizinischen und dentalen Bereichen eingesetzt werden, wie beispielsweise bei einer Läsion der Retina oder auch für eine Augenoperation mittels Laser. Nach diesem Verfahren wird eine Ablation eines Bereichs eines Substrats durchgeführt, indem dieser Bereich des Substrats mit einem ersten Strahlungspuls einer ersten Wellenlänge bestrahlt wird, dann dieser Bereich des Substrats mit einem zweiten Strahlungspuls einer zweiten, längeren Wellenlänge bestrahlt wird, wobei zumindest einer des ersten oder des zweiten Strahlungspulses eine ausreichende Energiefluenz besitzt, um den Schwellwert für eine ablative Fotodekomposition des Bereichs des Substrats zu übersteigen. Weiterhin ist angegeben, dass die erste Wellenlänge innerhalb des Absorptionsspektrums des Substrats liegen soll und die zweite, längere Wellenlänge des zweiten Strahlungspulses innerhalb des Absorptionsspektrums der Moleküle des Substrats, angeregt durch Bestrahlen des Bereichs des ersten Strahlungspulses, liegen soll. Als Beispiel für die Erzeugung des ersten Strahlungspulses wird ein 193 nm Laserpuls verwendet, während der anschließende zweite Strahlungspuls durch einen 308 nm Laserpuls erzeugt wird.

Die JP H06 114577 A beschreibt eine Feinbearbeitungsvorrichtung, bei der zwei Laserstrahlen, die eine unterschiedliche Wellenlänge haben, von zwei Laseroszillatoren abgegeben werden. Diese beiden Laserstrahlen werden an einem Halbspiegel überlagert und auf eine Platte (dry plate) über eine Fokussierlinse gerichtet. Durch die unterschiedlichen Wellenlängen der beiden Laserstrahlen ist der jeweilige durch die Fokussierlinse erzeugte Fokus unterschiedlich positioniert. Durch die gleichzeitige Bestrahlung der Platte mit beiden Laserstrahlen wird aufgrund der unterschiedlichen Fokuslänge ein Loch in der Platte erzeugt, das eine Bodenform mit scharfen Kanten besitzt.

Der Erfindung liegt die Aufgabe zugrunde, ein Verfahren unter Einsatz von Laserstrahlung zu schaffen, mit dem eine große Abtragsrate bei gleichzeitig schädigungsfreiem Abtragen/Schneiden erreichbar ist, so dass durch die Einwirkung der Laserstrahlung beim Abtragen/Schneiden und nach der Bearbeitung keine zusätzlichen Spannungen oder zusätzlichen Risse in den sprödharten Werkstoff, insbesondere im Bereich der Abtragsflanken der Abtragsvertiefung, eingebracht werden.

Der Erfindung liegt die Aufgabe zugrunde, ein Verfahren zu schaffen, mit dem die vorstehend beschriebenen Schädigungen, die von der Eintrittskante ausgehen oder die ursächlich auf Laserstrahlung zurückgehen, die auf die Eintrittskante auftrifft, vermieden oder zumindest weitest gehend unterbunden werden.

Gelöst wird diese Aufgabe durch ein Verfahren mit den Merkmalen des Anspruchs 1. Erfindungsgemäß werden die mindestens zwei Wellenlängen so gewählt, dass sich Interferenz-Muster aufgrund der Beugung und Brechung sowohl im Materialvolumen als auch im Volumen der Abtragsvertiefung im Vergleich zu Laserstrahlung mit nur einer der Wellenlängen derart einstellen, dass ein Kontrast K in der räumlichen Struktur der Intensitätsverteilung verkleinert wird, wobei der Kontrast K nach Michelson definiert ist als K = (Imax-Imin)/(Imax+Imin), wobei I die Intensität angibt. Der Kontrast K nach Michelson ist hierbei ein Maß für das periodische Muster von Beugungsmaxima und Beugungsminima. Hierzu wird eine Wellenlängenmischung aus den mindestens zwei Wellenlängen so gewählt, dass räumliche Positionen von Interferenz-Maxima der einen Wellenlänge(n) in Interferenz-Minima der anderen Wellenlänge(n) fallen, wodurch erreicht wird, dass die Abtragsflanke nicht aufgeraut wird und so auch die fokussierende Wirkung der rauen Abtragskante nicht ausgebildet wird, und so der Schwellenwert für den Abtrag ρ_{damage}, bei dem Schädigungen/Risse auftreten, nicht erreicht wird. Durch diese Maßnahmen wird der Intensitätskontrast im Bereich der Oberfläche der Flanken der Abtragsvertiefung reduziert und dadurch eine räumlich lokalisierte und damit überhöhte Belastung des Materials vermieden, und zwar als Folge davon, dass für die Bearbeitung des sprödharten Materials Laserstrahlung mit zwei unterschiedlichen Wellenlängen, die überlagert werden, verwendet wird.

Eine Überlagerung von Laserstrahlung mit unterschiedlichen Wellenlängen erzeugt nämlich zu jeder Wellenlänge ein in der Abtragsvertiefung räumlich verschobenes Beugungsmuster. Durch Wahl der passenden Wellenlängen der eingesetzten Strahlungsanteile, der Leistungen und der Fokusradien der (mindestens zwei) zu überlagernden Wellenlängen können die Beugungsmaxima der Laserstrahlung mit der ersten Wellenlänge an die Orte fallen, wo die Beugungsminima der Laserstrahlung mit der zweiten Wellenlänge liegen. Im Ergebnis dieser Überlagerung wird der Kontrast der überlagerten Beugungsstruktur deutlich kleiner mit der Folge, dass eine hohe Abtragsrate und, wenn überhaupt, geringe Spannungen und/oder Risse nach dem Abtrag erreicht werden.

Um den kleinsten Kontrast zu erreichen, müssen die Wellenlängen der zu überlagernden Strahlungsanteile, die zu den Wellenlängen gehörenden Leistungen und die zugehörigen Fokusradien der Strahlungsanteile angepasst werden. Wie vorstehend erwähnt ist, treten bei der mechanischen Bearbeitung von dünnen Glasplatten Risse auf. Solche Risse sind aber auch bei der Bearbeitung der Glasplatten mit Laserstrahlung zu beobachten. Die Erfinder haben herausgefunden, dass sich diese Risse in mindestens drei unterschiedlichen Erscheinungsformen äußern:
- Risse erster Art: Eine Schädigung/Rissbildung/Chipping tritt auf der Rückseite des Werkstoffes auf. Risse erster Art treten auch schon dann auf, wenn auf der Vorderseite - von wo aus die Laserstrahlung einfällt - noch keine Schädigung und auch noch kein Abtrag erfolgt sind.
- Risse zweiter Art: Risse oder Schädigungen - auch Spikes genannt - gehen von der Eintrittskante aus, die den Übergang von dem unveränderten Teil der Oberfläche des Werkstücks in die seitlichen Abtragsflanken der sich ausbildenden Abtragsvertiefung darstellt.

Die Risse oder Schädigungen zweiter Art verlaufen über eine - im Vergleich zu Rissen dritter Art - große Tiefe in das Volumen des Materials. Diese von der Eintrittskante ausgehenden Material-Modifikationen/-Schädigungen können auch im Volumen sichtbar werden bzw. entstehen (sie werden dann auch "Filamente" genannt; Kerr-Effekt und Selbstfokussierung sind die physikalischen Ursachen) oder sogar die Rückseite bzw. die der Laserstrahlung abgewandte Oberfläche des Werkstücks erreichen.
- Risse dritter Art: Die Entstehung von feinen, nicht so tief eindringenden Rissen tritt zusätzlich zu den Rissen zweiter Art oder Schädigungen zweiter Art - entlang der abgetragenen Oberfläche (Schnittkante) - auf; sie sind nicht auf den Bereich nahe der Eintrittskante beschränkt und treten dort auf, wo die Laserstrahlung in der Abtragsvertiefung auf die abgetragene Oberfläche (Abtragsflanken), das bedeutet die Abtragsflanken, einfällt. Sie breiten sich von der abgetragenen Oberfläche in das Material aus. Die Risse dritter Art dringen im Vergleich zu den Rissen erster Art weniger tief in das Material ein. Die raue Oberfläche der Abtragsvertiefung weist im Vergleich zur Eintrittskante eine Rauhigkeit mit kleineren Krümmungsradien auf. Die fokussierende Wirkung der rauen Oberfläche der Abtragsvertiefung ist wesentlich stärker als die fokussierende Wirkung der Eintrittskante.

Diese Risse dritter Art werden somit durch das Verfahren dieser Erfindung vermieden oder zumindest deutlich gegenüber herkömmlichen Verfahren reduziert. Weiterhin können Strahlungsanteile der Laserstrahlung zusätzlich zu den mindestens zwei Strahlungsanteilen eingesetzt werden, die Wellenlängen haben, die ganzzahlige Vielfache oder Teiler der mindestens zwei Wellenlängen, die als Grund-Wellenlängen bezeichnet werden können, sind.

In einer weiteren Ausführungsform kann jede Wellenlänge durch einen gesonderten Laser bereitgestellt werden. Dies hat den Vorteil, dass die Fokusradien und die Leistungsanteile der unterschiedlichen Wellenlängen der Laserstrahlung eingestellt werden können. Falls die Laserquelle eine Modulation der Wellenlänge erlaubt, können die unterschiedlichen Wellenlängen durch eine Laserquelle bzw. ein Lasergerät bereitgestellt werden.

Falls die Laserquelle mehrere Wellenlängen emittiert, wie das z.B. bei Diodenlasern der Fall ist, können die unterschiedlichen Wellenlängen durch eine Laserquelle bzw. ein Lasergerät bereitgestellt werden, deren Wellenlänge moduliert wird.

Erfindungsgemäß wird die Leistung der Laserstrahlung, die von der fokussierenden Wirkung der Eintrittskante erfasst wird, so eingestellt wird, dass die Intensität im Material, die durch die Fokussierung der Eintrittskante erreicht wird, einen Schwellenwert ρ_{damage} für die Schädigung des Materials nicht erreicht.

Durch diese Maßnahme werden die von der Eintrittskante ausgehenden Schädigungen wesentlich reduziert oder auch vermieden, da hierdurch die Intensität der Laserstrahlung verringert wird und dadurch eine räumlich lokalisierte und damit überhöhte Belastung des sprödharten Materials vermieden wird.

Vorzugsweise wird bei dem erfindungsgemäße Verfahren der Poyntingvektor P von dem Anteil der Laserstrahlung, der auf die nicht abgetragene Oberfläche des Materials im Bereich der Abtragsvertiefung einfällt, in Richtung auf die Eintrittskante geneigt eingestellt und der Einfallswinkel w_{E} der Laserstrahlung wird so gewählt, dass er nicht kleiner als Null (w_{E}>=0 Winkelgrade) ist.

Weiterhin kann es von Vorteil sein, den Poyntingvektor P von dem Anteil der Laserstrahlung, der im Bereich der Abtragsvertiefung in die Abtragsvertiefung fällt, senkrecht zum Normalenvektor n_{F} auf der Flanke der Abtragsvertiefung einzustellen und den Einfallswinkel w_{E} der Laserstrahlung mit w_{E}=90 Winkelgrade zu wählen. Eine vorteilhafte Ausführungsform des Verfahrens ist dann gegeben, wenn die räumliche Verteilung der Laserstrahlung am Eintritt in die Abtragsvertiefung rechteckförmig eingestellt wird (Rechteck). Hierdurch wird nämlich erreicht, dass der Bereich der Eintrittskante eine kleine Ausdehnung annimmt und so der Anteil der Laserstrahlung, der von dem Bereich der Eintrittskante erfasst und in das Material fokussiert wird, klein wird.

Auch kann in einer weiteren Ausführungsform die räumliche Verteilung der Laserstrahlung am Eintritt in die Abtragsvertiefung senkrecht zur Einfallsrichtung der Laserstrahlung gesehen gaußförmig eingestellt werden, und die gaußförmige Verteilung wird an einem Abstand von der Strahlachse, wo die Intensität im Material einen Schwellenwert ρ_{damage} für die Schädigung des Materials erreicht, rechteckförmig abgeschnitten; für größere Abstände von der Strahlachse wird die Intensität der Laserstrahlung auf Null eingestellt, auch als Gauß-Rechteck bezeichnet. Die Laserstrahlachse ist durch den Mittelwert der Poyntingvektoren gemittelt über den Querschnitt des Laserstrahls definiert. Die Richtung der Laserstrahlung variiert über dem Querschnitt des Laserstrahls und ist durch die lokale Richtung des Poyntingvektors definiert. Typischerweise sind die Poyntingvektoren oberhalb des Fokus des Laserstrahls auf die Laserstrahlachse geneigt und unterhalb des Fokus von der Laserstrahlachse weg gerichtet. Eine Gauß-Rechteck förmige Verteilung der Intensität im Laserstrahl ist definiert als eine gaußförmige Verteilung, die ab einem definierten Abstand von der Laserstrahlachse - etwa durch eine Blende - keine Intensität mehr aufweist. Mathematisch ist ein Gauß-Rechteck die Multiplikation einer gaußförmigen Verteilung mit einer Rechteckverteilung, die den Maximalwert 1 aufweist. Mit Rechteckverteilung ist eine 2D-Rechteckverteilung gemeint, die um die Laserstrahlachse rotiert wurde. Weitere Einzelheiten und Merkmale der Erfindung ergeben sich aus der nachfolgenden Beschreibung von Ausführungsbeispielen anhand der Zeichnung. In der Zeichnung zeigt
- Figur 1: schematisch eine Abtragsvertiefung mit Kennzeichnung der verschiedenen Rissbildungen/Schädigungen zweiter Art und dritter Art,
- Figur 2: eine simulierte Abtragsvertiefung, die die Ausbreitung der sich ausbildenden Risse zweiter Art und dritter Art darstellt,
- Figur 3: eine schematische Skizze, um die Entstehung einer Abtragsvertiefung mit rauen Abtragsflanken zu erläutern,
- Figur 4: das Beugungsmuster, das durch Beugung der einfallenden Laserstrahlung an den Abtragsflanken entsteht,
- Figur 5: eine Bildfolge a bis e, um die Entstehung der Risse dritter Art zu erläutern, und
- Figur 6: in einer vergrößerten Simulationsdarstellung den Kontrast der räumlichen Verteilung der Intensität in der Abtragsvertiefung entsprechend Bild a der Figur 5,
- Figur 7: das Prinzip der Entstehung eines Risses zweiter Art (Abbildungen a, b) und das Prinzip des erfindungsgemäßen Verfahrens, um diese Risse zu vermeiden oder zumindest zu unterdrücken (Abbildungen c, d),
- Figur 8: eine simulierte Abtragsvertiefung, die mit einer TopHat-förmigen Verteilung der Intensität der Laserstrahlung erzeugt wurde,
- Figur 9: eine Ansicht entsprechend der Figur 6, jedoch mit einer räumlichen Verteilung der Intensität der Laserstrahlung, die sich aus einer TopHat-Verteilung und einer Gauß-Verteilung zusammensetzt,
- Figur 10: eine Ansicht entsprechend der Figur 6 mit einer schmalen, räumlichen Gauß-Verteilung der Intensität der Laserstrahlung unter Einsatz einer Laserstrahlung mit einem Strahlradius <4µm, und
- Figur 11: eine Ansicht entsprechend der Figur 6 mit einer räumlichen TopHat-Verteilung der Laserstrahlung am Eintritt in die Abtragsvertiefung.

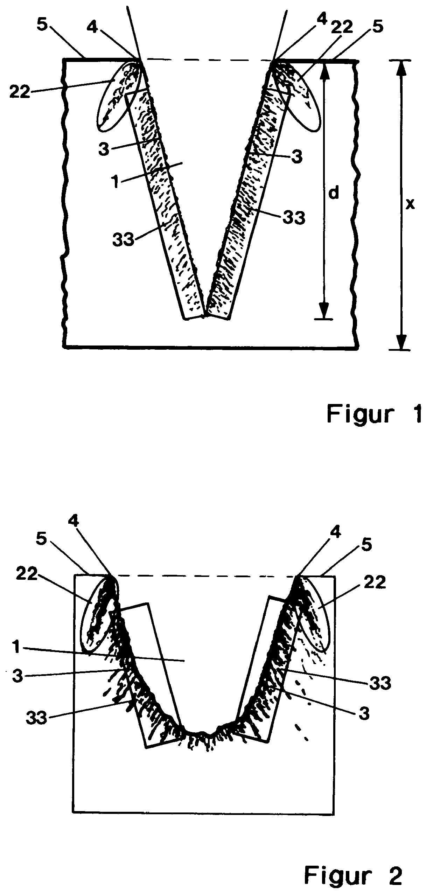

In der Darstellung der Figur 1 ist schematisch eine V-förmige Abtragsvertiefung 1 dargestellt, die in einem dünnen Glasmaterial 2 mit einer Dicke x gebildet ist. Diese Abtragsvertiefung 1 besitzt Abtragsflanken 3, die von einer Eintrittskante 4 an der Oberfläche 5 des Materials ausgehen.

Für die verschiedenen Begriffe, die hier verwendet werden, sind die folgenden Definitionen anwendbar:
Schwellenwert ρ_{ablation} ist der Schwellenwert der Elektronendichte, bei dem eine Ablation/ein Abtrag einsetzt,
Schwellenwert ρ_{damage} ist der Schwellenwert der Elektronendichte, bei dem Schädigungen/Risse einsetzen,
Pulsparameter ist ein Satz von Parametern, mit denen die räumlichen, zeitlichen und spektralen Eigenschaften der einfallenden Laserstrahlung charakterisiert werden.
Der Pulsparameter enthält mindestens die Werte für
- Pulsdauer,
- Maximalwert der Intensität im Puls,
- zeitliche Pulsform; hierbei handelt es sich um die zeitliche Verteilung der Intensität von Laserstrahlung in einem Einzelpuls oder in einer Folge (Mehrfachpuls, Pulsburst) von Pulsen,
- räumliche Verteilung der Intensität und
- spektrale Verteilung der Intensität (Wellenlängenmischung)

Eintrittskante ist ein räumlich ausgedehnter Bereich der Oberfläche des Werkstücks, wo ein unveränderter Teil der Oberfläche des Werkstücks in den Teil der Oberfläche übergeht, in dem der Abtrag von Werkstoff stattgefunden hat und eine Abtragsvertiefung entstanden ist.

Rand der Abtragsvertiefung ist eine durch den Abtrag von Material erzeugte Oberfläche.

Rückseite oder Unterseite des Werkstücks ist die der Laserstrahlung abgewandte Oberfläche des Werkstücks.

Bei den drei vorstehend erläuterten unterschiedlichen Erscheinungsformen von Schädigungen/Rissen handelt es sich bei
Rissen erster Art um Rückseitenschädigungen,
Rissen zweiter Art um Eintrittskantenschädigungen,
Rissen dritter Art um Schädigungen, die von der Oberfläche der Abtragsvertiefung, das bedeutet von den Flanken der Abtragsvertiefung, ausgehen.

Es werden zwei Schwellenwerte ρ_{damage}, ρ_{ablation} für die Elektronendichte ρ im Werkstoff, die jeweils eine Schädigung ρ_{damage} oder einen Abtrag ρ_{ablation} des Werkstoffes bewirken, definiert. Für jeden Werkstoff können diesen unterschiedlichen Schwellenwerten ρ_{damage}, ρ_{ablation} für die Elektronendichte ρ, wobei ρ_{damage} < ρ_{ablation} ist, zwei Sätze von Werten für die Parameter der Laserstrahlung zugeordnet werden.

Eine das Licht brechende Eigenschaft, zum Beispiel fokussierende Eigenschaft, der Eintrittskante ist für die Erfindung von besonderer Bedeutung. Die Eintrittskante kann nämlich eine geometrische Form und eine Ausdehnung aufweisen, die zwei unerwünschte Effekte bewirken kann, die allerdings durch das erfindungsgemäße Verfahren vermieden oder wesentlich verringert werden können. Zum einen kann durch die geometrische Form eine unerwünschte Fokussierung der einfallenden Laserstrahlung in den Werkstoff auftreten und zum anderen kann durch die Ausdehnung die Leistung der einfallenden Laserstrahlung, die von der Eintrittskante erfasst und dann in den Werkstoff fokussiert wird, in unerwünschter Weise einen Wert annehmen, so dass die Intensität in dem Fokus der Eintrittskante eine Elektronendichte p erzeugt, die den Schwellenwert ρ_{damage} der Elektronendichte für eine Schädigung des Werkstoffes/Materials überschreitet und nicht den Schwellenwert ρ_{ablation} der Elektronendichte für einen Abtrag erreicht.

Bei der Schädigung des Werkstoffes/Materials treten die drei unterschiedlichen Arten von Rissen auf, die bereits vorstehend erläutert wurden.

Risse erster Art sind solche, die schon dann auftreten, wenn von der Vorderseite - wo die Laserstrahlung einfällt - noch keine Schädigung und auch kein Abtrag erfolgt ist.

Die Risse zweiter Art und dritter Art werden anhand der Figuren 1 und 2 verdeutlicht.

In den Figuren 1 und 2 sind die Risse zweiter Art mit dem Bezugszeichen 22 und die Risse dritter Art mit dem Bezugszeichen 33 gekennzeichnet.

Erreichen die von der abgetragenen Oberfläche ausgehenden Risse 22 die Unterseite bzw. die der Laserstrahlung abgewandte Oberfläche des Werkstücks, dann können sie oft von den Rissen erster Art, das bedeutet Schädigungen der Unterseite des Werkstücks, ohne dass die Oberseite des Werkstücks bereits abgetragen ist, nicht mehr unterschieden werden. Risse oder Schädigungen der dritten Art beginnen an der rauen Abtragsvertiefung, d.h. an der abgetragenen Oberfläche, und dort, wo die abgetragene Oberfläche eine Abweichung von einer Ebenheit aufweist.

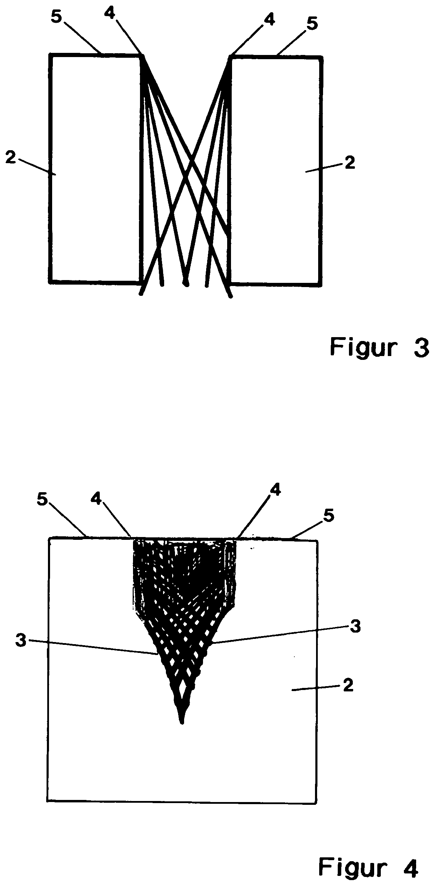

Diese Abweichung der Abtragsvertiefung von der Ebenheit entsteht dadurch, dass die einfallende Laserstrahlung an dem Eintritt der Abtragsvertiefung und in deren Verlauf in die Tiefe des Werkstücks (Abtragsfront, Schnittkante) gebeugt wird und eine Beugungsstruktur aufweist, wie sie in den Figuren 3 und 4 dargestellt ist. Diese Beugungsstruktur ist eine räumliche Modulation der Intensität und erzeugt die Abweichung von einer ebenen Abtragsfront. Die entstehende Beugungsstruktur für die Intensität der Strahlung in der Abtragsvertiefung führt zu Überhöhungen der Intensität an der Abtragsfront und damit zu einer Abweichung der Abtragfront von einer glatten oder ebenen Abtragsfront.

In dem Verfahren wird als Laserstrahlung für den Abtrag eine Wellenlängenmischung aus mindestens zwei Wellenlängen eingesetzt. Hierbei werden erfindungsgemäß die mindestens zwei Wellenlängen so gewählt, dass sich Interferenz-Muster aufgrund der Beugung und Brechung sowohl im Materialvolumen als auch im Volumen der Abtragsvertiefung im Vergleich zu Laserstrahlung mit nur einer der Wellenlängen derart einstellen, dass ein Kontrast K in der räumlichen Struktur der Intensitätsverteilung verkleinert wird, so dass dadurch eine räumlich lokalisierte und damit überhöhte Belastung des Materials vermieden wird. Der Kontrast K ist hierbei nach Michelson definiert als K = (Imax-Imin)/(Imax+Imin), wobei I die Intensität angibt.

Somit wird der Kontrast zwischen Intensitätsmaxima und Intensitätsminima verringert, der ansonsten für die Beugung der Laserstrahlung an der Oberfläche bzw. den Flanken der Abtragsvertiefung und aufgrund der Fähigkeit der Laserstrahlung zur Interferenz ursächlich ist.

Durch die erfindungsgemäße Überlagerung von Laserstrahlung mit mindestens zwei unterschiedlichen Wellenlängen wird zu jeder Wellenlänge ein in der Abtragsvertiefung räumlich verschobenes Beugungsmuster erzeugt. Die mindestens zwei Wellenlängen, auch in Verbindung mit der Einstellung der Leistungen und Fokusradien der entsprechenden Laserstrahlung, können so gewählt werden, dass die Beugungsmaxima der Laserstrahlung mit der ersten Wellenlänge an die Orte fallen, wo die Beugungsminima der Laserstrahlung mit der zweiten Wellenlänge liegen. Als Ergebnis dieser Überlagerung wird der Kontrast der überlagerten Beugungsstruktur wesentlich kleiner.

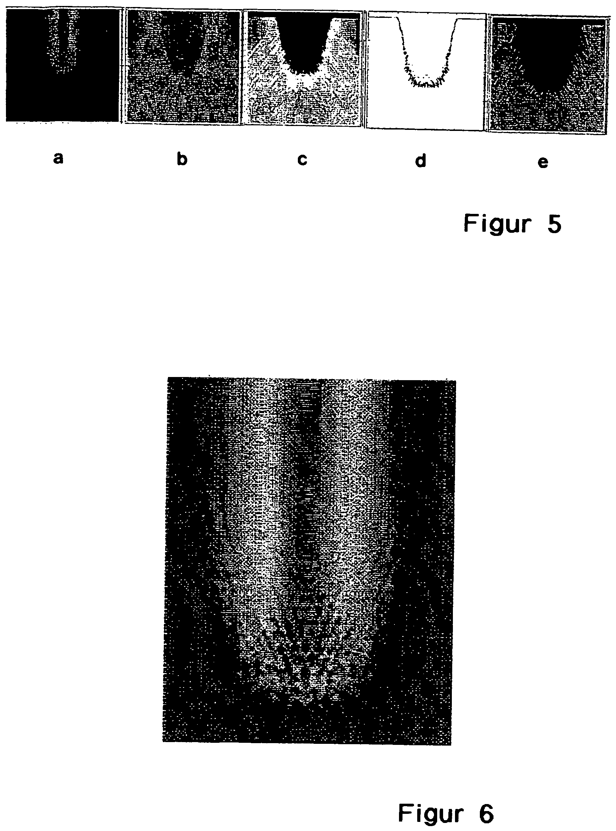

Figur 5 verdeutlicht in der Bildfolge der Bilder a bis e nochmals die Entstehung von Rissen dritter Art, wie sie in dem letzten Bild e der Bildfolge, nach acht Pulsen einer Laserstrahlung, zu sehen sind.

Bild a zeigt die ursächliche Verteilung der Intensität in der Abtragsvertiefung, Bild b diejenige im sprödharten Material. Bild c stellt die freie Elektronendichte, Bild d die Oberfläche der Abtragsvertiefung und Bild e die resultierende Verteilung von Modifikationen/Schädigungen/Rissen nach 8 Pulsen der Laserstrahlung dar.

Anhand der Bilder der Figur 5 ist zu erkennen, dass sich die räumliche Struktur der Intensitätsverteilung in der Abtragsvertiefung (Bild a) in einer unerwünscht stark ausgeprägten räumlichen Struktur der Intensität der Laserstrahlung im sprödharten Material fortsetzt (Bild b). Im Ergebnis sind auch die geometrische Form der Oberfläche der Abtragsvertiefung (Bild d), die erzeugte Dichte freier Elektronen (Bild c) und die Modifikationen/Schädigungen (Bild e) räumlich strukturiert und es bilden sich unerwünschte Risse der dritten Art aus.

Die räumliche Ausdehnung der Grafen ist 40µm in beiden Richtungen, um die Größenverhältnisse zu verdeutlichen.

Als Kontrast, wie er hier verwendet wird, wird die Abweichung der Intensität der Laserstrahlung von einer räumlich schwach veränderlichen Verteilung bezeichnet, wie sie bei einer ungestört propagierenden Laserstrahlung in der Abtragsvertiefung vorliegen würde (Bild a von Figur 5).

Dieser Kontrast in der räumlichen Verteilung der Intensität in der Abtragsvertiefung, der zu verkleinern ist, ist nochmals in der vergrößerten Figur 6 gezeigt. Dieser Kontrast in der räumlichen Struktur der Intensitätsverteilung in der Abtragsvertiefung wird gemäß der Erfindung verkleinert, indem Laserstrahlung mit mindestens zwei unterschiedlichen Wellenlängen überlagert werden.

Erfindungsgemäß wird, um das Auftreten von Rissen zweiter Art in Form einer Schädigung/Rissbildung, die von der Eintrittskante des zu bearbeitenden Werkstoffs ausgeht, zu vermeiden, die Leistung der Laserstrahlung, die von der fokussierenden Wirkung der Eintrittskante erfasst wird, so eingestellt, dass die Intensität im Material, die durch die Fokussierung der Eintrittskante erreicht wird, einen Schwellenwert ρ_{da-mage} für die Schädigung des Materials nicht erreicht.

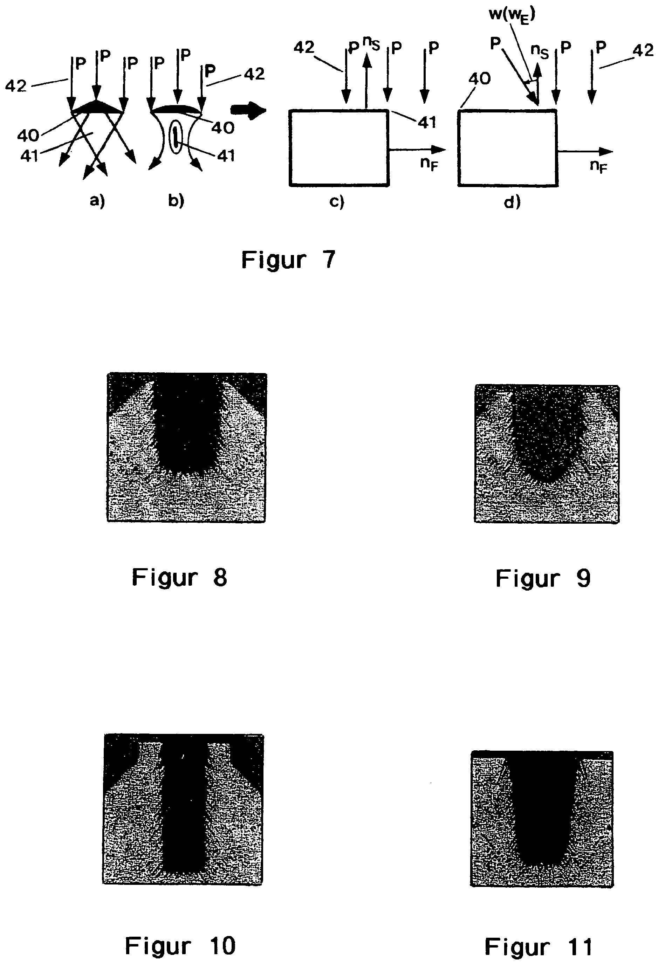

In Figur 7 ist eine Bildfolge gezeigt, wobei die Abbildungen a) und b) das Prinzip der Entstehung eines Risses zweiter Art darstellen, während die Bildfolge mit den Abbildungen c) und d) dazu dient, die erfindungsgemäßen Maßnahmen zu verdeutlichen, um das Entstehen solcher Risse zweiter Art zu vermeiden oder wesentlich zu reduzieren.

In den Abbildungen 7a) und 7b) sind die jeweiligen Eintrittskanten einer Abtragsvertiefung durch einen Bereich 40 angedeutet. Diese Eintrittskante umfasst somit einen räumlich ausgedehnten Bereich 40, in dem die Laserstrahlung fokussiert wird. In den Abbildungen 7c) und 7d) ist der räumlich ausgedehnte Bereich 40 durch seine Lage als ein Übergangsbereich von der nicht abgetragenen Oberfläche in die Flanke der Abtragsvertiefung zugeordnet.

In dem Material des Werkstücks bildet sich ein Bereich einer Schädigung bzw. der Beginn eines Filaments aus, der mit dem Bezugszeichen 41 bezeichnet ist.

Mit den Pfeilen 42 sind die Poyntingvektoren P (mit Richtung und Betrag) angegeben, deren zeitgemittelter Betrag auch als Intensität bezeichnet wird.

In den Abbildungen c) und d) der Figur 7 sind neben den Poyntingvektoren P (Bezugszeichen 42) die Normalenvektoren n_{S} auf der nicht abgetragenen Oberfläche und die Normalenvektoren n_{F} auf der abgetragenen Oberfläche (Schnittkante, Rand der Abtragsvertiefung) dargestellt. Schließlich ist in der Abbildung d) der Figur 7 der Einfallswinkel w_{E} des Poyntingvektors P auf der nicht abgetragenen Oberfläche angegeben. Wie anhand der Figur 7 zu erkennen ist, ist der Einfallswinkel w_{E} definiert als der Winkel zwischen dem Poyntingvektor P der Laserstrahlung und dem Normalenvektor n_{S} der Oberfläche, auf die der Laserstrahl einfällt. Der Laserstrahl fällt entweder auf die Flanke der Abtragsvertiefung mit der Oberflächennormalen n_{F} ein (Figur 7c) oder fällt auf die nicht abgetragene Oberfläche der Oberflächennormalen n_{S} ein (Figur 7d). Der Einfallswinkel w_{E} ist gleich dem Flankenwinkel w, wenn der Poyntingvektor parallel zur Oberflächennormalen n_{S} auf der nicht abgetragenen Oberfläche des Materials verläuft (siehe z. B. Figur 7c).

Erfindungsgemäß wird nun die Laserstrahlung so eingestellt, um zu vermeiden, dass zwei räumliche Anteile der Strahlung von der Eintrittskante derart in das nicht abgetragene Material gebrochen und fokussiert werden und in dem Material überlagert werden, dass der Schwellenwert ρ_{damage} für die Schädigung überschritten wird und somit der Schwellenwert für den Abtrag ρ_{ablation} nicht erreicht wird. Als Folge entsteht kein Riss/Schädigung zweiter Art.

Die Ausdehnung der Umgebung der Eintrittskante ist dadurch definiert, dass die in den fokussierend wirkenden Teil der Eintrittskante einfallende Laserstrahlung ausreichend Leistung enthält, so dass im Fokus dieser Leistung mindestens die Schädigungsschwelle des Materials bzw. Werkstoffs erreicht werden kann. Folglich sind, um Schädigungen im Material, die durch Laserstrahlung entstehen, die an der Eintrittskante zu der Abtragsvertiefung in das Material gebrochen und fokussiert wird, zu vermeiden, zwei Größen zu berücksichtigen und richtig einzustellen, nämlich zum einen die geometrische Form der Eintrittskante und zum anderen die Richtung der einfallenden Laserstrahlung und somit der Winkel w des Poyntingvektors zu dem auf dem nicht abgetragenen Teil der Oberfläche stehenden Normalenvektor n_{S}.

Wie vorstehend erwähnt, führt die geometrische Form der Eintrittskante zu einer Brechung der Laserstrahlung und im ungünstigen Fall zur Fokussierung der einfallenden Laserstrahlung, wie dies in den Abbildungen a) und b) der Figur 7 schematisch dargestellt ist. Die geometrische Form der Eintrittskante weist idealerweise eine scharfe Kante auf, die keine räumliche Ausdehnung besitzt; folglich ist die geometrische Form der Eintrittskante idealerweise eine solche ohne Krümmung (sie ist idealerweise eine Kante mit einem Krümmungsradius r, der den Wert r=0 annimmt). Um eine Kante mit dem Krümmungsradius nahe r=0 (mit dem Kriterium aus dem folgenden Absatz) zu erreichen, besteht eine erfindungsgemäße Maßnahme darin, eine Gauß-Rechteck Verteilung der einfallenden Intensität einzustellen.

Nach dem erfindungsgemäßen Verfahren ist die geometrische Form der Eintrittskante so einzustellen, dass die Leistung der Laserstrahlung, die von der Eintrittskante fokussiert wird bzw. von der fokussierenden Wirkung der Eintrittskante erfasst wird, so klein ist, dass die durch die Fokussierung erreichbare Intensität den Schwellenwert ρ_{damage} für die Schädigung des Materials des Werkstücks nicht erreicht.

Die zweite Größe, die zu beachten ist, ist die Richtung der einfallenden Laserstrahlung, das bedeutet die Richtung des Poyntingvektors P der Laserstrahlung auf der nicht abgetragenen Oberfläche des Materials des Werkstücks. Idealerweise soll die Richtung der einfallenden Laserstrahlung außerhalb der Abtragsvertiefung, d.h. auf dem nicht abgetragenen Teil der Werkstückoberfläche, parallel zum Normalenvektor n_{S} auf der nicht abgetragenen Oberfläche und innerhalb der Abtragsvertiefung senkrecht zum Normalenvektor n_{F} auf dem Rand der Abtragsvertiefung liegen.

Entsprechend dem erfindungsgemäßen Verfahren wird nun die Richtung der einfallenden Laserstrahlung, folglich die Richtung des Poyntingvektors P der Laserstrahlung, auf der nicht abgetragenen Oberfläche des Materials des Werkstücks in Richtung auf die Abtragsvertiefung um einen Winkel w zu dem Normalenvektor n_{S} geneigt, das bedeutet, sie bildet einen Einfallswinkel w>=0 auf der nicht abgetragenen Oberfläche zu dem Normalenvektor n_{S} (siehe Abbildung d) der Figur 7) und ist innerhalb der Abtragsvertiefung idealerweise senkrecht zum Normalenvektor n_{F} auf dem Rand der Abtragsvertiefung.

In den Figuren 8 bis 11 sind nun die Ergebnisse verschiedener Maßnahmen dargestellt, die angewandt werden können, um die geometrische Form der Eintrittskante zu beeinflussen.

Figur 8 zeigt die simulierte Ausbildung einer Abtragsvertiefung, die mit einer einfallenden Laserstrahlung erzielt wird, die eine TopHat-förmige, räumliche Verteilung (d.h. quer zur Einfallsrichtung) der Intensität der einfallenden Laserstrahlung aufweist. Durch diese Maßnahme ist der Bereich der Eintrittskante stark verkleinert bzw. nicht mehr vorhanden und die noch vorhandenen Schädigungen besitzen eine wesentlich kleinere Eindringtiefe in das Material, ausgehend von der Eintrittskante, als bei einer Gauß-förmigen räumlichen Verteilung der Laserstrahlung, die üblicherweise eingesetzt wird.

Die Figur 9 zeigt nun eine simulierte Darstellung entsprechend der Figur 8, bei der jedoch die Laserstrahlung eine räumliche Verteilung der Intensität der einfallenden Laserstrahlung aufweist, die sich aus einer TopHat-Verteilung für große Abstände von der Laserstrahlachse und einer Gauß-Verteilung nahe der Laserstrahlachse zusammensetzt. Es ist deutlich zu erkennen, dass auch hierbei noch der Anteil der Laserstrahlung aufgrund der TopHat-Verteilung im oberen Bereich der Abtragsvertiefung annähernd parallele Abtragsflanken ergibt, allerdings mit einem runden Abtragsgrund, der eine Folge der Anteile der Laserstrahlung aufgrund der Gauß-Verteilung ist. Das Ergebnis dieser Simulation ist darüber hinaus eine etwas größere Eindringtiefe in das Material als der Fall, bei dem die räumliche Verteilung der Intensität der einfallenden Laserstrahlung nur TopHat-förmig ist.

Bei der Simulation, wie sie in Figur 10 dargestellt ist, wurde Laserstrahlung mit einem schmalen Strahlradius (<4µm) und einer Gauß-Verteilung eingesetzt. Im Bereich der Eintrittskante ist die rissbildende Wirkung der aus dem Bereich der Eintrittskante fokussierten Laserstrahlung, das sind Risse zweiter Art bzw. Eintrittskantenschädigungen, nicht mehr vorhanden.

Lediglich die Risse dritter Art, d.h. Schädigungen, die von der Oberfläche der Abtragsvertiefung ausgehen, das bedeutet von den Flanken der Abtragsvertiefung ausgehen, treten noch auf. Die Risse dritter Art sind zwar noch vorhanden, aber deutlich kleiner ausgeprägt und die Abtrags- bzw. Bohrgeschwindigkeit nimmt größere Werte an. Das Erreichen kleiner Flanken-Winkel ist experimentell nachgewiesen.

Figur 11 zeigt eine Simulation, bei der die Laserstrahlung gepulst wird und die Wellenlänge der Laserstrahlung von Puls zu Puls alternierend von 500nm auf 1000nm wechselt. Die geometrische Form der sich vorteilhaft ausbildenden großen Krümmung des Bereichs der Eintrittskante bewirkt eine Verkleinerung der fokussierten Intensität aus dem Bereich der Eintrittskante in das Volumen und damit ein Unterschreiten der Schädigungsschwelle und ein Vermeiden dieser Ursache für die Rissbildung.

## Patentansprüche

1. Verfahren zum Abtragen von sprödhartem Material (2) mittels Laserstrahlung, bei dem sich durch den Abtrag eine Abtragsvertiefung (1) in dem Material (2) ausbildet, deren Flächen (3), auch als Flanken bezeichnet, beugend und brechend auf die eingebrachte Laserstrahlung wirken und dadurch Strahlungsanteile dieser Laserstrahlung Interferenz-Beugungsmuster innerhalb der Abtragsvertiefung (1) erzeugen, die, sobald diese Strahlungsanteile wieder auf die Flächen (3) der Abtragsvertiefung (1) treffen und in das Materialvolumen eindringen, dort einen entlang der Flächen (3) räumlich veränderlichen Abtrag bewirken und als Folge die Oberfläche (3) aufrauen und Risse in dem Materialvolumen induzieren, wobei als Laserstrahlung für den Abtrag eine Wellenlängenmischung aus mindestens zwei Wellenlängen eingesetzt wird, **dadurch gekennzeichnet, dass** die mindestens zwei Wellenlängen so gewählt werden, dass sich Interferenz-Beugungsmuster aufgrund der Beugung und Brechung sowohl entlang der Flächen (3) der Abtragsvertiefung (1) als auch im Materialvolumen im Vergleich zu Laserstrahlung mit nur einer der Wellenlängen derart einstellen, dass räumliche Positionen von Interferenz-Maxima der einen Wellenlänge(n) in Interferenz-Minima der anderen Wellenlänge(n) fallen, wobei die Leistung der Laserstrahlung, die von der fokussierenden Wirkung der Eintrittskante, definiert als ein räumlich ausgedehnter Bereich der Oberfläche des Werkstücks, wo ein unveränderter Teil der Oberfläche des Werkstücks in den Teil der Oberfläche übergeht, in dem der Abtrag von Werkstoff stattgefunden hat und eine Abtragsvertiefung entstanden ist, erfasst wird, so eingestellt wird, dass die Intensität im Material, die durch die Fokussierung der Eintrittskante erreicht wird, einen Schwellenwert (ρ_{damage}) für die Schädigung des Materials (2) nicht erreicht.

2. Verfahren nach Anspruch 1, **dadurch gekennzeichnet, dass** zusätzliche Wellenlängen zu den mindestens zwei Wellenlängen so gewählt sind, dass sie ganzzahlige Vielfache oder Teiler der mindestens zwei Wellenlängen sind.

3. Verfahren nach Anspruch 1 oder 2, **dadurch gekennzeichnet, dass** jede Wellenlänge durch einen gesonderten Laser bereitgestellt wird.

4. Verfahren nach Anspruch 1 oder 2, **dadurch gekennzeichnet, dass** die unterschiedlichen Wellenlängen durch eine Laserquelle bereitgestellt werden, deren Wellenlänge zeitlich moduliert wird.

5. Verfahren nach Anspruch 1, **dadurch gekennzeichnet, dass** die Abtragsvertiefung (1) einen Flankenwinkel w, der als der Winkel zwischen der Oberflächennormalen auf der Abtragsvertiefung (1) und der Oberflächennormalen auf einer Flanke der nicht abgetragenen Oberfläche des Materials (2) definiert ist, aufweist, und mit einer Eintrittskante (4), die als ein räumlich ausgedehnter Bereich der Oberfläche (5) des Materials (2), wo ein unveränderter und damit nicht abgetragener Teil der Oberfläche (5) des Materials (2) in die Abtragsvertiefung (1) übergeht, definiert ist, und an der räumliche Anteile der Leistung der Laserstrahlung in das nicht abgetragene Material (2) gebrochen und fokussiert werden, und dass der Anteil der Leistung der Laserstrahlung, der von der fokussierenden Wirkung der Eintrittskante (4) erfasst wird, so eingestellt wird, dass die Intensität der Laserstrahlung im Volumen des Materials (2), die durch die Fokussierung der Eintrittskante (4) erreicht wird, eine Elektronendichte p erzeugt, die einen Schwellenwert (ρ_{damage}) für die Schädigung des Materials (2) nicht erreicht.

6. Verfahren nach Anspruch 5, **dadurch gekennzeichnet, dass** ein Poyntingvektor (P) von dem Anteil der Laserstrahlung, der auf die nicht abgetragene Oberfläche (5) des Materials (2) im Bereich der Abtragsvertiefung (1) einfällt, in Richtung auf die Eintrittskante (4) geneigt eingestellt wird und dass der Einfallswinkel (w_{E}) der Laserstrahlung nicht kleiner als Null ist.

7. Verfahren nach Anspruch 5 oder 6, **dadurch gekennzeichnet, dass** ein Poyntingvektor P von dem Anteil der Laserstrahlung, der im Bereich der Eintrittskante (4) in die Abtragsvertiefung (1) fällt, senkrecht zum Normalenvektor (n_{F}) auf der Flanke (3) der Abtragsvertiefung (1) eingestellt wird und dass der Einfallswinkel (w) der Laserstrahlung 90 Winkelgrade ist.

8. Verfahren nach Anspruch 5 oder 6, **dadurch gekennzeichnet, dass** die räumliche Verteilung der Laserstrahlung am Eintritt in die Abtragsvertiefung (1) senkrecht zur Richtung der Laserstrahlachse gesehen rechteckförmig eingestellt wird.

9. Verfahren nach einem der Ansprüche 6 bis 7, **dadurch gekennzeichnet, dass** die räumliche Verteilung der Laserstrahlung am Eintritt in die Abtragsvertiefung (1) gaußförmig eingestellt wird und die gaußförmige Verteilung an einem Abstand von der Strahlachse, wo die Intensität im Volumen des Materials (2) eine Elektronendichte p erzeugt, die den Schwellenwert (ρ_{damage}) für die Schädigung des Materials (2) erreicht, rechteckförmig abgeschnitten wird, und für größere Abstände von der Strahlachse die Intensität Null ist.

## Claims

1. Method for removing brittle-hard material (2) by means of laser radiation, wherein a removal depression (1) forms in the material (2) as a result of the removal, the surfaces (3) of which removal depression, also referred to as flanks, have a diffractive and refractive effect on the laser radiation introduced and, as a result, radiation portions of said laser radiation generate interference diffraction patterns within the removal depression (1), which, as soon as said radiation portions impinge again on the surfaces (3) of the removal depression (1) and penetrate into the material volume, bring about there a removal that is spatially variable along the surfaces (3) and as a consequence roughen the surface (3) and induce cracks in the material volume, wherein a wavelength mixture comprising at least two wavelengths is used as laser radiation for the removal, **characterized in that** the at least two wavelengths are selected in such a way that interference diffraction patterns are established on account of the diffraction and refraction both along the surfaces (3) of the removal depression (1) and in the material volume in comparison to laser radiation with only one of the wavelengths in such a way that spatial positions of interference maxima of the one wavelength(s) fall into interference minima of the other wavelength(s), wherein the power of the laser radiation which is detected by the focusing effect of the entry edge, defined as a spatially extended region of the surface of the workpiece, where an unaltered part of the surface of the workpiece merges into the part of the surface in which the removal of material has taken place and a removal depression has been created is adjusted in such a way that the intensity in the material which is reached by the focusing of the entry edge does not reach a threshold (ρ_{damage}) for the damage to the material (2).

2. Method according to claim 1, **characterized in that** additional wavelengths to the at least two wavelengths are selected to be integer multiples or divisors of the at least two wavelengths.

3. Method according to claim 1 or 2, **characterized in that** each wavelength is provided by a separate laser.

4. Method according to claim 1 or 2, **characterized in that** the different wavelengths are provided by a laser source the wavelength of which is temporally modulated.

5. Method according to claim 1, **characterized in that** the removal depression (1) has a flank angle w defined as the angle between the surface normal on the removal depression (1) and the surface normal on a flank of the non-removed surface of the material (2), and having an entry edge (4) defined as a spatially extended region of the surface (5) of the material (2) where an unaltered and thus non-removed part of the surface (5) of the material (2) merges into the removal depression (1), and at which spatial portions of the power of the laser radiation are refracted and focused into the non-removed material (2), and that the portion of the power of the laser radiation detected by the focusing effect of the entry edge (4) is adjusted such that the intensity of the laser radiation in the volume of the material (2) reached by the focusing of the entry edge (4) generates an electron density ρ which does not reach a threshold (ρ_{damage}) for the damage to the material (2).

6. Method according to claim 5, **characterized in that** a Poynting vector (P) of the portion of the laser radiation incident on the non-removed surface (5) of the material (2) in the region of the removal depression (1) is set inclined towards the entry edge (4) and that the angle of incidence (w_{E}) of the laser radiation is not less than zero.

7. Method according to claim 5 or 6, **characterized in that** a Poynting vector P of the portion of the laser radiation falling into the removal depression (1) in the region of the entry edge (4) is set perpendicular to the normal vector (n_{F}) on the flank (3) of the removal depression (1), and that the angle of incidence (w) of the laser radiation is 90 angular degrees.

8. Method according to claim 5 or 6, **characterized in that** the spatial distribution of the laser radiation at the entry into the removal depression (1) is set to a rectangular shape, viewed in a direction perpendicular to the direction of the laser beam axis.

9. Method according to one of claims 6 to 7, **characterized in that** the spatial distribution of the laser radiation at the entry into the removal depression (1) is adjusted in a Gaussian manner and the Gaussian distribution at a distance from the beam axis where the intensity in the volume of the material (2) produces an electron density ρ which reaches the threshold (ρ_{damage}) for the damage to the material (2) is cut off rectangularly, and for larger distances from the beam axis the intensity is zero.

## Revendications

1. Procédé de retrait de matériau dur et cassant (2) au moyen d'un rayonnement laser, dans lequel il se forme dans le matériau (2), du fait du retrait, un évidement de retrait (1) dont les surfaces (3), appelées aussi flancs, agissent de manière diffractante et réfringente sur le rayonnement laser introduit de sorte que des fractions de rayonnement de ce rayonnement laser produisent des figures de diffraction-interférence à l'intérieur de l'évidement de retrait (1), qui, dès que ces fractions de rayonnement parviennent de nouveau sur les surfaces (3) de l'évidement de retrait (1) et pénètrent dans le volume du matériau, y réalisent un retrait spatialement variable le long des surfaces (3) et par suite rendent rugueuse la surface (3) et induisent des fissures dans le volume du matériau, où un mélange de longueurs d'onde d'au moins deux longueurs d'onde est utilisé comme rayonnement laser pour le retrait, **caractérisé en ce que** les au moins deux longueurs d'onde sont choisies de telle sorte qu'il se forme des figures de diffraction-interférence du fait de la diffraction et de la réfraction aussi bien le long des surfaces (3) de l'évidement de retrait (1) que dans le volume du matériau par comparaison avec un rayonnement laser avec seulement l'une des longueurs d'onde, que les positions spatiales de maxima d'interférence de la ou des premières longueurs d'onde sont situées dans les minima d'interférence de la ou des autres longueurs d'onde, où la puissance du rayonnement laser, qui est collectée par l'effet focalisant de l'arête d'entrée, définie comme un domaine spatialement étendu de la surface de la pièce, où une partie non modifiée de la surface de la pièce fait place à la partie de la surface dans laquelle le retrait de matière a eu lieu et un évidement de retrait s'est formé, est réglée de telle manière que l'intensité dans le matériau, qui est atteinte par la focalisation de l'arête d'entrée, n'atteint pas une valeur seuil (ρ_{damage}) pour la détérioration du matériau (2).

2. Procédé selon la revendication 1, **caractérisé en ce que** des longueurs d'onde supplémentaires par rapport aux au moins deux longueurs d'onde sont choisies de telle manière qu'elles sont des multiples entiers ou des diviseurs des au moins deux longueurs d'onde.

3. Procédé selon la revendication 1 ou 2, **caractérisé en ce que** chaque longueur d'onde est fournie par un laser particulier.

4. Procédé selon la revendication 1 ou 2, **caractérisé en ce que** les différentes longueurs d'onde sont fournies par une source laser dont la longueur d'onde est modulée temporellement.

5. Procédé selon la revendication 1, **caractérisé en ce que** l'évidement de retrait (1) présente un angle de flanc w, qui est défini comme l'angle entre la normale à la surface sur l'évidement de retrait (1) et la normale à la surface sur un flanc de la surface du matériau (2) qui n'a pas fait l'objet d'un retrait, et avec une arête d'entrée (4), qui est définie comme un domaine spatialement étendu de la surface (5) du matériau (2) où une partie non modifiée et donc qui n'a pas fait l'objet d'un retrait de la surface (5) du matériau (2) fait place à l'évidement de retrait (1), et au niveau de laquelle des fractions spatiales de la puissance du rayonnement laser sont réfractées et focalisées dans le matériau (2) qui n'a pas fait l'objet d'un retrait, et **en ce que** la fraction de la puissance du rayonnement laser qui est collectée par l'effet focalisant de l'arête d'entrée (4) est réglée de telle manière que l'intensité du rayonnement laser dans le volume du matériau (2), qui est atteinte par la focalisation de l'arête d'entrée (4), produit une densité d'électrons p qui n'atteint pas une valeur seuil (ρ_{damage}) pour la détérioration du matériau (2).

6. Procédé selon la revendication 5, **caractérisé en ce qu'**un vecteur de Poynting (P) de la fraction du rayonnement laser qui parvient sur la surface (5) du matériau (2) qui n'a pas fait l'objet d'un retrait dans le domaine de l'évidement de retrait (1), est réglé incliné en direction de l'arête d'entrée (4) et **en ce que** l'angle d'incidence (w_{E}) du rayonnement laser n'est pas inférieur à zéro.

7. Procédé selon la revendication 5 ou 6, **caractérisé en ce qu'**un vecteur de Poynting P de la fraction du rayonnement laser qui parvient dans le domaine de l'arête d'entrée (4) dans l'évidement de retrait (1), est réglé perpendiculaire au vecteur normal (n_{F}) sur le flanc (3) de l'évidement de retrait (1) et **en ce que** l'angle d'incidence (w) du rayonnement laser est de 90 degrés d'angle.

8. Procédé selon la revendication 5 ou 6, **caractérisé en ce que** la répartition spatiale du rayonnement laser à l'entrée dans l'évidement de retrait (1) est réglée rectangulaire vue perpendiculairement à la direction de l'axe du rayonnement laser.

9. Procédé selon l'une des revendications 6 à 7, **caractérisé en ce que** la répartition spatiale du rayonnement laser à l'entrée dans l'évidement de retrait (1) est réglée gaussienne et **en ce que** la répartition gaussienne est découpée en forme de rectangle à une distance de l'axe du rayonnement où l'intensité dans le volume du matériau (2) produit une densité d'électrons p qui atteint la valeur seuil (ρ_{damage}) pour la détérioration du matériau (2), et l'intensité est nulle pour de plus grandes distances de l'axe du rayonnement.
